# EUROPEAN PATENT APPLICATION

(11) **EP 4 675 071 A1**
(43) Date of publication of application: **07.01.2026**
(21) Application number: 24778071.1
(22) Date of filing: 27.03.2024
(51) Int. Cl.: E05F 15/00, E05F 15/635, E05D 13/00, E05D 15/06, E06B 3/46

(54) **DOOR DEVICE, CONNECTING DEVICE AND VEHICLE**

(30) Priority: 31.03.2023 CN 202310359551
(71) Applicant: Shenzhen Yinwang Intelligent Technologies Co., Ltd., Shenzhen, Guangdong 518110 (CN)
(72) Inventor: TU, Jiyang, Shenzhen, Guangdong 518129 (CN); ZHANG, Jing, Shenzhen, Guangdong 518129 (CN); WANG, Hongji, Shenzhen, Guangdong 518129 (CN); HUA, Peng, Shenzhen, Guangdong 518129 (CN)
(74) Representative: MERH-IP Matias Erny Reichl Hoffmann Patentanwälte PartG mbB
(86) International application number: PCT/CN2024/084104
(87) International publication number: WO 2024/199285

(57) **Abstract**

A connection apparatus is disclosed, including: a sliding rail mechanism (210), where the sliding rail mechanism (210) includes an internal rack (211); and a transmission mechanism (220), where the transmission mechanism (220) includes a sliding portion (2210), and the sliding portion (2210) is engaged with the internal rack (211). The sliding rail mechanism (210) is configured to move relative to the sliding portion (2210) under driving of the sliding portion (2210). A door apparatus (200) including the connection apparatus and a vehicle are further provided. The door apparatus (200) including the connection apparatus is used in the vehicle, so that use of a sliding door is no longer limited by a vehicle shape. In addition, this helps increase an opening degree of lateral sliding of a door body (400) and effectively limits an opening degree of longitudinal pushing and pulling of the door body (400).

## Description

This application claims priority to Chinese Patent Application No. 202310359551.6, filed with the China National Intellectual Property Administration on March 31, 2023 and entitled "DOOR APPARATUS, CONNECTION APPARATUS, AND VEHICLE", which is incorporated herein by reference in its entirety.

### TECHNICAL FIELD

This application relates to the field of vehicle technologies, and specifically, to a door apparatus, a connection apparatus, and a vehicle.

### BACKGROUND

At present, there are two types of common vehicle doors: a swing-out vehicle door and a sliding vehicle door. The sliding vehicle door is usually disposed only at a rear door position of a vehicle due to a special structure of the sliding vehicle door.

Sliding rails of the sliding vehicle door include an internal sliding rail and an external sliding rail, the internal sliding rail is disposed at the top of a side panel of a vehicle body and in a door sill area, and the external sliding rail is disposed on an outer side of the vehicle body. As a result, the sliding vehicle door is likely to accumulate foreign matter in the sliding rail and affects appearance of the vehicle, and an opening degree of the vehicle door is limited by a vehicle shape.

### SUMMARY

Embodiments of this application provide a door apparatus, a connection apparatus, and a vehicle, to resolve problems that foreign matter is likely to be accumulated in a sliding rail mechanism of a sliding vehicle door, use of the sliding vehicle door has a great limitation on a vehicle shape, the sliding vehicle door cannot be used in a front door, and an opening degree of the vehicle door is limited by the vehicle shape.

According to a first aspect, a door apparatus is provided, including a door body and a connection apparatus. The connection apparatus includes: a sliding rail mechanism, where the sliding rail mechanism includes an internal rack; and a transmission mechanism, where the transmission mechanism includes a sliding portion, and the sliding portion is engaged with the internal rack. The sliding rail mechanism is fastened in the door body, and the transmission mechanism is configured to drive the sliding portion and drive the door body to move along the sliding rail mechanism.

For example, the transmission mechanism is fastened to a base portion, and the base portion is an object fastened around the door body. Further, when the door body is a vehicle door, the base portion may be a side panel of a vehicle body inside a cab.

For example, the transmission mechanism may be a mechanical swing arm including a transmission apparatus, and the mechanical swing arm is bent and unfolded based on the transmission apparatus. When the mechanical swing arm is bent, the door body can be driven to move toward an inner side of the vehicle body and an action of closing the vehicle door is completed. When the mechanical swing arm is unfolded, the door body can be driven to move toward an outer side of the vehicle body and an action of opening the vehicle door is completed, so that the door body and the side panel of the vehicle body are not in a same plane, and the door body can further slide laterally.

For example, the transmission mechanism may alternatively be a hydraulic telescopic arm. When the hydraulic telescopic arm is compressed, the door body can be driven to move toward an inner side of the vehicle body and an action of closing the vehicle door is completed. When the hydraulic telescopic arm is unfolded, the door body can be driven to move toward an outer side of the vehicle body and an action of opening the vehicle door is completed, so that the door body and the side panel of the vehicle body are not in a same plane, and the door body can further slide laterally.

According to the foregoing technical solution, a structure in which the sliding rail mechanism cooperates with the transmission mechanism is used, so that use of the sliding door is no longer limited by a vehicle shape, and the sliding door can be used in both a front door and a rear door of a vehicle. On the contrary, a vehicle shape design of the vehicle is not limited by use of the sliding door. In addition, this helps increase an opening degree of lateral sliding of the door body and can effectively limit an opening degree of longitudinal pushing and pulling of the door body.

With reference to the first aspect, in some implementations of the first aspect, the sliding rail mechanism is fastened in an inner cavity of the door body, the sliding rail mechanism further includes a curved sliding rail portion and a straight sliding rail portion, and the curved sliding rail portion is connected to the straight sliding rail portion.

According to the foregoing technical solution, the sliding rail mechanism can be prevented from being exposed outside the door body, to avoid accumulation of foreign matter in a sliding rail. In addition, the transmission mechanism may enter a deep part of a cavity of the door body along the curved sliding rail portion, so that the transmission mechanism occupies small internal space.

With reference to the first aspect, in some implementations of the first aspect, the transmission mechanism further includes a front arm and a rear arm.

The front arm and the rear arm are located in a same plane, and a first end of the front arm is rotatably connected to a first end of the rear arm.

For example, because the front arm is rotatably connected to the rear arm, the front arm of the transmission mechanism may rotate around a first axis relative to the rear arm, to push the door body toward a first direction. The first axis is a straight line perpendicular to a plane in which rotation axes of the front arm and the rear arm are located. The first direction is a direction outside a door, namely, a direction in which the door is pushed outward. A specific sliding direction of the door body needs to be determined with reference to both a swing direction of the transmission mechanism and a sliding rail line shape of the curved sliding rail portion. Correspondingly, the door body may also be pulled back along an original sliding trajectory based on the foregoing structure.

According to the foregoing technical solution, based on a structure of the mechanical arm, the transmission mechanism can push the door body toward the first direction, to provide a prerequisite for lateral sliding of the door body.

With reference to the first aspect, in some implementations of the first aspect, the door apparatus further includes a drive mechanism, the transmission mechanism further includes a sixth transmission portion and a seventh transmission portion, the seventh transmission portion is fastened to a second end of the rear arm, the seventh transmission portion is engaged with the sixth transmission portion, and the sixth transmission portion is connected to the drive mechanism.

For example, the drive mechanism may be driven based on a motor.

For example, the sixth transmission portion is a worm gear, the seventh transmission portion is a bevel gear, a worm wheel of the sixth transmission portion is engaged with the seventh transmission portion, and a worm of the sixth transmission portion is fastened to a drive shaft of the drive mechanism.

For example, when the drive mechanism operates, the drive mechanism drives the worm of the sixth transmission portion to rotate around its own axis, the worm of the sixth transmission portion drives the worm wheel of the sixth transmission portion to rotate, the worm wheel of the sixth transmission portion drives the seventh transmission portion to rotate, and the seventh transmission portion drives the rear arm to rotate around its own axis. This provides a prerequisite for transmitting a driving force to the sliding portion.

For example, to enable the door apparatus to be used in a scenario of a non-electric sliding door, for example, an unexpected scenario such as power-off of the drive mechanism, a clutch mechanism is further included between the sixth transmission portion and the seventh transmission portion. The clutch mechanism includes a detached state and a connected state. When a drive motor cannot work, the clutch mechanism switches to the detached state to break a connection relationship, namely, an engagement force, between the sixth transmission portion and the seventh transmission portion, so that the door body can be manually pushed and slid easily. When the drive motor works, the clutch mechanism switches to the connected state to connect the sixth transmission portion to the seventh transmission portion, so that the drive motor can transmit a driving force to the transmission mechanism, to implement automatic sliding of the door body.

The foregoing technical solution provides a prerequisite for implementing automatic opening and closing of the door body, to improve convenience of use of a vehicle.

With reference to the first aspect, in some implementations of the first aspect, the transmission mechanism further includes an eighth transmission portion, the eighth transmission portion is fastened to a second end of the front arm, and the eighth transmission portion is engaged with the sliding portion.

According to the foregoing technical solution, the eighth transmission portion is used, so that a transmission force can be finally applied to the sliding portion. Further, based on rotation of the sliding portion and the engagement relationship between the sliding portion and the sliding rail mechanism, the door body is pulled to slide along a sliding rail line shape of the sliding rail mechanism.

With reference to the first aspect, in some implementations of the first aspect, the eighth transmission portion includes a first bevel gear and a second bevel gear, the sliding portion includes a spur gear, the first bevel gear is coaxially fastened to the second end of the front arm, and the second bevel gear is engaged with both the first bevel gear and the sliding portion.

According to the foregoing technical solution, a transmission force transmitted to the eighth transmission portion can be further transmitted to the sliding portion, to provide a prerequisite for the sliding portion to drive the door body to slide.

With reference to the first aspect, in some implementations of the first aspect, the transmission mechanism further includes: a first transmission portion, where the first transmission portion is coaxially fastened to the first end of the rear arm; a third transmission portion, where the third transmission portion is coaxially fastened to the first end of the front arm; and a second transmission portion, where the second transmission portion is engaged with both the first transmission portion and the third transmission portion.

According to the foregoing technical solution, the front arm of the transmission mechanism can be rotatably connected to the rear arm. In this way, the front arm rotates around a first axis relative to the rear arm, to push the door body toward a first direction. The first axis is an axis of a rotation mechanism.

With reference to the first aspect, in some implementations of the first aspect, the first transmission portion and the second transmission portion are bevel gears, the third transmission portion is a bevel gear with a variable transmission ratio, and a variable transmission ratio coefficient of the third transmission portion is greater than 1.

For example, it is assumed that the variable transmission ratio coefficient of the third transmission portion is M. When the second transmission portion rotates one revolution, based on a feature of the variable transmission ratio of the third transmission portion, a transmission ratio from the second transmission portion to the third transmission portion may be increased by a factor of M. In other words, the third transmission portion may rotate M revolutions, and based on the M revolutions of the third transmission portion, the front arm is driven to rotate M revolutions around its own axis. When there is no gear with a variable transmission ratio between the sliding portion and the front arm, the sliding portion may also rotate M revolutions. Through proper calculation, after the sliding portion rotates M revolutions, the sliding portion may cover a sliding rail trajectory of the entire sliding rail mechanism.

According to the foregoing technical solution, the transmission mechanism can implement bending and extension motion, so that the door body can implement actions of opening and closing. In addition, a prerequisite is provided for finally transmitting a transmission force to the sliding portion, so that the door body can slide laterally.

With reference to the first aspect, in some implementations of the first aspect, the door apparatus further includes a first sleeve, the first sleeve is sleeved on the front arm and is fastened to the front arm, the first sleeve includes a fifth transmission portion, the transmission mechanism further includes a fourth transmission portion, the fourth transmission portion is an intermittent transmission portion and is coaxially fastened to the second transmission portion, and the fourth transmission portion is engaged with the fifth transmission portion.

For example, because the fourth transmission portion is an intermittent transmission portion and the fourth transmission portion is coaxial with the second transmission portion, after the fourth transmission portion is engaged with the fifth transmission portion of the first sleeve, when a driving force of the drive mechanism is transmitted to the second transmission portion through components of the transmission mechanism and drives the second transmission portion to rotate, the fourth transmission portion rotates with the second transmission portion, and drives the fifth transmission portion to intermittently rotate, so that the first sleeve drives the front arm to swing within a first range. The first range is an interval range of a first angle, and the first angle is an included angle between the front arm and the rear arm. A size of the first range is related to a structure of the fourth transmission portion. For example, for an incomplete gear, more sawtooth parts indicate a larger first range.

According to the foregoing technical solution, the front arm can intermittently swing, and it is ensured that after the front arm extends to a specified position, based on the drive mechanism, the door body is only driven to continue to slide laterally and is not further pushed outward. In addition, the first sleeve is used to wrap the front arm, so that the front arm is protected and can be prevented from being entangled with another component in a process in which the front arm rotates around its own axis.

With reference to the first aspect, in some implementations of the first aspect, the fourth transmission portion is any one of the following components: an incomplete gear, a groove wheel, a ratchet, or a cam.

For example, to implement the engagement relationship between the fourth transmission portion and the fifth transmission portion, specific composition of the fifth transmission portion needs to match specific composition of the fourth transmission portion. For example, when the fourth transmission portion is an incomplete gear, the fifth transmission portion is a rack.

For example, when the fourth transmission portion is an incomplete gear, after the fourth transmission portion rotates the first angle, although the fourth transmission portion continues to rotate based on rotation of the second transmission portion, a part that is of the fourth transmission portion and that has no sawtooth cannot have an engagement relationship with the fifth transmission portion. Therefore, even if the fourth transmission portion continuously rotates, the swing arm based on the fourth transmission portion does not continuously swing. In addition, the sliding portion that rotates based on a transmission force also continuously rotates, to realize a motion relationship in which the transmission mechanism intermittently swings and the sliding portion can continuously rotate.

According to the foregoing technical solution, the front arm can intermittently swing, and it is ensured that after the front arm extends to a specified position, based on the drive mechanism, the door body is only driven to continue to slide laterally and is not further pushed outward.

With reference to the first aspect, in some implementations of the first aspect, the door apparatus further includes a second sleeve, the second sleeve is sleeved on the rear arm and is fastened to the rear arm, and the second sleeve is fastened relative to the front arm.

For example, the door apparatus further includes a fastening portion, the fastening portion is configured to fasten the second sleeve to the base portion, to fasten the transmission mechanism to the base portion. The base portion is an object fastened around the door body. Further, when the door body is a vehicle door, the base portion may be a side panel of a vehicle body inside a cab.

According to the foregoing technical solution, the front arm of the transmission mechanism can intermittently swing, so that the door body is pushed outward. This provides a prerequisite for the door body to slide laterally, and can ensure that the second opening degree is maintained within a small range. In addition, the sleeve is used to wrap the outside of the transmission mechanism, so that the transmission mechanism is protected and the transmission mechanism can be prevented from being entangled with or colliding with another component or the like, to improve safety of the door apparatus.

According to a second aspect, a connection apparatus is provided, including: a sliding rail mechanism, where the sliding rail mechanism includes an internal rack; and a transmission mechanism, where the transmission mechanism includes a sliding portion, and the sliding portion is engaged with the internal rack. The sliding rail mechanism is configured to move relative to the sliding portion under driving of the sliding portion.

For example, the connection apparatus may be used in a scenario other than a door body. In other words, a mounting object is not limited to the door body. The connection apparatus allows the mounting object to slide along a sliding rail line shape of the sliding rail mechanism.

With reference to the second aspect, in some implementations of the second aspect, the sliding rail mechanism further includes a curved sliding rail portion and a straight sliding rail portion, and the curved sliding rail portion is connected to the straight sliding rail portion.

With reference to the second aspect, in some implementations of the second aspect, the transmission mechanism further includes a front arm and a rear arm.

The front arm and the rear arm are located in a same plane, and a first end of the front arm is rotatably connected to a first end of the rear arm.

With reference to the second aspect, in some implementations of the second aspect, the connection apparatus further includes a drive mechanism, the transmission mechanism further includes a sixth transmission portion and a seventh transmission portion, the seventh transmission portion is fastened to a second end of the rear arm, the seventh transmission portion is engaged with the sixth transmission portion, and the sixth transmission portion is connected to the drive mechanism.

With reference to the second aspect, in some implementations of the second aspect, the transmission mechanism further includes an eighth transmission portion, the eighth transmission portion is fastened to a second end of the front arm, and the eighth transmission portion is engaged with the sliding portion.

With reference to the second aspect, in some implementations of the second aspect, the eighth transmission portion includes a first bevel gear and a second bevel gear, the sliding portion includes a spur gear, the first bevel gear is coaxially fastened to the second end of the front arm, and the second bevel gear is engaged with both the first bevel gear and the sliding portion.

With reference to the second aspect, in some implementations of the second aspect, the transmission mechanism further includes: a first transmission portion, where the first transmission portion is coaxially fastened to the first end of the rear arm; a third transmission portion, where the third transmission portion is coaxially fastened to the first end of the front arm; and a second transmission portion, where the second transmission portion is engaged with both the first transmission portion and the third transmission portion.

With reference to the second aspect, in some implementations of the second aspect, the first transmission portion and the second transmission portion are bevel gears, the third transmission portion is a bevel gear with a variable transmission ratio, and a variable transmission ratio coefficient of the third transmission portion is greater than 1.

With reference to the second aspect, in some implementations of the second aspect, the connection apparatus further includes a first sleeve, the first sleeve is sleeved on the front arm and is fastened to the front arm, the first sleeve includes a fifth transmission portion, the transmission mechanism further includes a fourth transmission portion, the fourth transmission portion is an intermittent transmission portion and is coaxially fastened to the second transmission portion, and the fourth transmission portion is engaged with the fifth transmission portion.

With reference to the second aspect, in some implementations of the second aspect, the fourth transmission portion is any one of the following components: an incomplete gear, a groove wheel, a ratchet, or a cam.

With reference to the second aspect, in some implementations of the second aspect, the connection apparatus further includes a second sleeve, the second sleeve is sleeved on the rear arm and is fastened to the rear arm, and the second sleeve is fastened relative to the front arm.

According to a third aspect, a door apparatus is provided and used in a vehicle, and includes a door body and a double four-link. The double four-link includes a first fastening portion, a second fastening portion, a third fastening portion, and a fourth fastening portion. The first fastening portion and the second fastening portion are fastened to an edge of a side panel of a vehicle body, and the third fastening portion and the fourth fastening portion are fastened to the door body.

According to the foregoing technical solution, the double four-link is used to push and retract the door body, and there is no problem that foreign matter is likely to be accumulated in a sliding rail. In addition, the door body using the door apparatus is no longer limited by a vehicle shape, and can be used in both a front door and a rear door of a vehicle. On the contrary, a vehicle shape design of the vehicle is not limited by use of the door apparatus.

With reference to the third aspect, in some implementations of the third aspect, the door apparatus further includes a drive mechanism, and the double four-link further includes a transmission mechanism. The transmission mechanism is connected to the drive mechanism.

For example, the drive mechanism applies a driving force to the transmission mechanism, and the transmission mechanism unfolds or compresses the double four-link based on the driving force, to automatically open or close a vehicle door.

The foregoing technical solution can implement automatic opening and closing of the door body, to improve use experience and comfort of a vehicle.

According to a fourth aspect, a vehicle is provided, including the door apparatus according to any one of the possible implementations of the third aspect.

With reference to the fourth aspect, in some implementations of the fourth aspect, the door apparatus includes at least two connection apparatuses.

According to the foregoing technical solution, a degree of freedom of a vehicle door in a sliding process is limited by using the at least two connection apparatuses, so that it can be ensured that in a lateral sliding process of the door body, the door body is parallel as much as possible to a plane in which a side panel of a vehicle body is located, and does not scratch the side panel of the vehicle body.

With reference to the fourth aspect, in some implementations of the fourth aspect, fastening positions of a first connection apparatus and a second connection apparatus in the at least two connection apparatuses are staggered with each other.

The foregoing technical solution can further improve stability of a connection between the connection apparatus and the door body.

With reference to the fourth aspect, in some implementations of the fourth aspect, each of planes in which the sliding rail mechanisms of the at least two connection apparatuses are located is parallel to a plane in a length direction of the door body.

### BRIEF DESCRIPTION OF DRAWINGS

FIG. 1 is a diagram of a sliding vehicle door;
FIG. 2 is a diagram of a door apparatus 200 according to an embodiment of this application;
FIG. 3 is a diagram of another door apparatus 200 according to an embodiment of this application;
FIG. 4 is a diagram of another door apparatus 200 according to an embodiment of this application;
FIG. 5 is a diagram of another door apparatus 200 according to an embodiment of this application;
FIG. 6 is a diagram of another door apparatus 200 according to an embodiment of this application;
FIG. 7 is a diagram of a transmission mechanism 220 according to an embodiment of this application;
FIG. 8 is a diagram of a clutch mechanism 260 according to an embodiment of this application;
FIG. 9 is a diagram of another door apparatus 200 according to an embodiment of this application;
FIG. 10 is a side view of another transmission mechanism 220 according to an embodiment of this application;
FIG. 11 is a diagram of deployment of a door apparatus 200 according to an embodiment of this application;
FIG. 12 is a diagram of an operating principle of a door apparatus 200 according to an embodiment of this application;
FIG. 13 is a diagram of transmission between components of a door apparatus 200 according to an embodiment of this application;
FIG. 14 is a diagram of a door apparatus 300 according to an embodiment of this application; and
FIG. 15 is a diagram of an operating principle of a door apparatus 300 according to an embodiment of this application.

### DESCRIPTION OF EMBODIMENTS

The following describes technical solutions in embodiments of this application with reference to accompanying drawings.

It should be noted that, in descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists.

In embodiments of this application, the terms "first" and "second" are merely intended for a purpose of description, and shall not be understood as an indication or implication of relative importance or an implicit indication of a quantity of indicated technical features. Therefore, a feature defined by "first" or "second" may explicitly or implicitly include one or more features. In addition, in the descriptions of embodiments of this application, "a plurality of" means two or more, and "at least one" and "one or more" mean one, two, or more. The singular expression forms "one", "a", "the", "the foregoing", "this", and "the one" are intended to include an expression form like "one or more", unless otherwise specified in the context clearly.

Reference to "an embodiment", "some embodiments", or the like described in this specification indicates that one or more embodiments of this application include a specific feature, structure, or characteristic described with reference to the embodiment. Therefore, expressions such as "in an embodiment", "in some embodiments", "in some other embodiments", and "in other embodiments" that appear at different places in this specification do not necessarily mean reference to a same embodiment. Instead, the expressions mean "one or more but not all of embodiments", unless otherwise specifically emphasized in another manner. The terms "include", "comprise", "have", and their variants all mean "include but are not limited to", unless otherwise specifically emphasized in another manner.

In the descriptions of embodiments of this application, orientations or position relationships indicated by the terms "up", "down", "left", "right", "inside", "outside", "perpendicular", "horizontal", and the like are defined relative to orientations or positions at which components are schematically placed in the accompanying drawings. It should be understood that these directional terms are relative concepts, and are used for relative description and clarification, but not indicate or imply that a specified apparatus or component needs to have a specific orientation or be constructed and operated in a specific orientation. These directional terms may vary accordingly based on a change of the orientation in which a component is placed in the accompanying drawings, and therefore cannot be understood as a limitation on this application. In addition, in this application, "perpendicular" is not strictly perpendicular, but within an allowable error range. "Parallel" is not strictly parallel, but within an allowable error range.

In embodiments of this application, a same reference numeral represents a same component or a same part or component. For a same part or component in embodiments of this application, only one part or component may be marked with a reference numeral as an example in the figure. It should be understood that, for another same part or component, the reference numeral is also applicable. In addition, parts and components in the accompanying drawings are not drawn strictly to scale. Dimensions and sizes of the parts and components shown in the figures are merely examples. This shall not be understood as a limitation on this application.

A door apparatus provided in this application may be used in a moving carrier. The moving carrier in this application may include a road transportation tool, a water transportation tool, an air transportation tool, an industrial device, an agricultural device, an entertainment device, or the like. For example, the moving carrier may be a vehicle. The vehicle is a vehicle in a broad sense, and may be a transportation tool (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, or the like. A type of the vehicle is not specifically limited in embodiments of this application. For another example, the moving carrier may be a transportation tool such as an airplane or a ship.

In some possible embodiments, the door apparatus provided in this application may alternatively be used in another object, for example, a building such as a house or a closed booth.

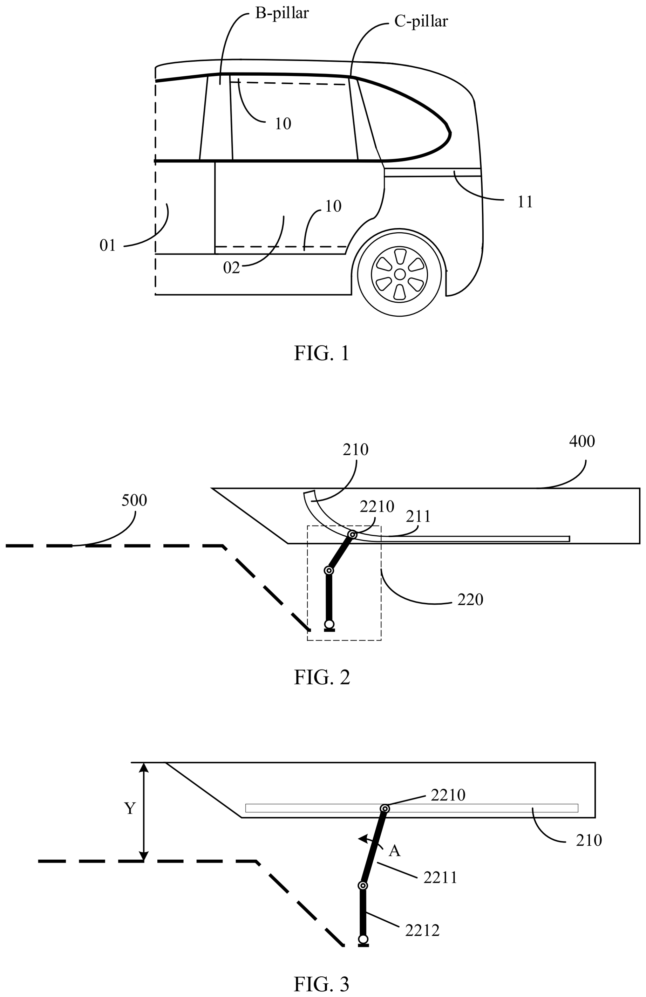

An ordinary vehicle is used as an example. At present, there are two types of common vehicle doors: a swing-out vehicle door and a sliding vehicle door. FIG. 1 is a diagram of a sliding vehicle door. Refer to FIG. 1. It can be learned that, sliding rails of the sliding vehicle door include an internal sliding rail 10 and an external sliding rail 11, the internal sliding rail 10 is disposed at the top of a side panel 600 of a vehicle body and in a door sill area, and the external sliding rail 11 is disposed on an outer side of the vehicle body. However, because a lateral (direction L) length of a door sill of the vehicle body at a rear door 01 is short, a vehicle shape design is affected. For example, because a curvature between a B-pillar and a C-pillar of the side panel 600 of the vehicle body is small and has a great limitation on a shape, the sliding vehicle door is usually used in a multi-purpose vehicle (multi-purpose vehicle, MPV) shown in FIG. 1, can implement only sliding of a rear door 02, and cannot be used in the front door 01. In addition, a first opening degree X of lateral opening is small, and a second opening degree Y of outward opening is large. For example, in some common PMV designs, the first opening degree X of lateral opening of the sliding vehicle door is usually less than 700 mm, and the second opening degree Y of outward opening is usually greater than 250 mm. In addition, foreign matter is likely to be accumulated in the external sliding rail 11 and the internal sliding rail 10.

In view of this, embodiments of this application provide a door apparatus. A sliding rail mechanism 210 and a transmission mechanism 220 that is fastened on a vehicle body side are used to replace the design of the combination of the internal sliding rail 10 and the external sliding rail 11 of the sliding vehicle door, to implement outward opening and lateral sliding motion of the sliding door. This helps increase the first opening degree X of lateral opening of the sliding door and reduce the second opening degree Y of outward opening. In addition, the door apparatus is applicable to a front door and a rear door of a vehicle and is not limited by a vehicle shape design.

In some possible embodiments, the door apparatus provided in embodiments of this application may be used in a vehicle, or may be used in another scenario, for example, a house or a building.

FIG. 2 is a diagram of a door apparatus 200 according to an embodiment of this application.

In some possible embodiments, the door apparatus 200 includes a door body 400, a sliding rail mechanism 210, and a transmission mechanism 220. The sliding rail mechanism 210 includes an internal rack 211, the transmission mechanism 220 includes a sliding portion 2210, the sliding portion 2210 is engaged with the internal rack 211, the sliding rail mechanism 210 is fastened in the door body 400, and the transmission mechanism 220 is configured to drive the sliding portion 2210 and drive the door body 400 to move along the sliding rail mechanism 210.

In some possible embodiments, the sliding rail mechanism 210 is fastened in an inner cavity of the door body 400. Such a structure can prevent the sliding rail mechanism 210 from being exposed outside the door body 400, to avoid accumulation of foreign matter in a sliding rail.

In some possible embodiments, the transmission mechanism 220 is fastened to a base portion 500, and the base portion 500 is an object fastened around the door body 400. Further, when the door body 400 is a vehicle door, the base portion 500 may be a side panel 600 of a vehicle body inside a cab.

In some possible embodiments, with reference to FIG. 2, the transmission mechanism 220 may be a mechanical swing arm including a transmission apparatus, and the mechanical swing arm is bent and unfolded based on the transmission apparatus. When the mechanical swing arm is bent, the door body 400 can be driven to move toward an inner side of the vehicle body and an action of closing the vehicle door is completed. When the mechanical swing arm is unfolded, the door body 400 can be driven to move toward an outer side of the vehicle body and an action of opening the vehicle door is completed, so that the door body 400 and the side panel 600 of the vehicle body are not in a same plane, and the door body 400 can further slide laterally.

FIG. 3 is a diagram of another door apparatus 200 according to an embodiment of this application.

In some possible embodiments, the transmission mechanism 220 further includes a front arm 2211 and a rear arm 2212. The front arm 2211 and the rear arm 2212 are located in a same plane, and a first end of the front arm 2211 is rotatably connected to a first end of the rear arm 2212.

According to the foregoing technical solution, because the front arm 2211 is rotatably connected to the rear arm 2212, the front arm 2211 of the transmission mechanism 220 may rotate around a first axis relative to the rear arm 2212. The first axis is a straight line perpendicular to a plane in which rotation axes of the front arm 2211 and the rear arm 2212 are located, to push the door body 400 toward a first direction A. The first direction A is a direction outside a door, namely, a direction in which the door is pushed outward.

In some possible embodiments, the door apparatus 200 may meet a function requirement of an electric sliding door. Swing motion of the transmission mechanism 220 may be implemented based on a drive mechanism. The drive mechanism may be driven based on a motor, the transmission mechanism 220 transmits a motor driving force to the sliding portion 2210 based on the engagement relationship between the sliding portion 2210 and the internal rack 211, and the sliding portion 2210 is allowed to pull, based on the engagement relationship with the internal rack 211 of the sliding rail mechanism 210, the entire door body 400 to slide along a sliding rail line shape of the sliding rail mechanism 210, so that a lateral opening degree of the door body 400 reaches a first opening degree X. The first opening degree X is equal to a straight line length of the sliding rail mechanism 210 mapped in a lateral direction L. This design provides a condition for maximizing the first opening degree X, so that the door body 400 can be greater than 700 mm in a fully-open state.

Refer to the door apparatus 200 shown in FIG. 3. It is considered that if the sliding rail mechanism 210 is only a straight sliding rail portion 213, an arm span of the mechanical swing arm used as the transmission mechanism 220 needs to be long enough to push the door body 400 to a position that is not in a same plane as the side panel 600 of the vehicle body. In such a structure design, the front arm 2211 of the mechanical arm is long and occupies large internal space of the vehicle body, a second opening degree Y of outward opening of the door body 400 may be increased, and large external space of the vehicle body is occupied. In addition, after the door body 400 is fully closed, a large gap exists between the door body 400 and the side panel 600 of the vehicle body.

In view of this, an embodiment of this application provides another door apparatus 200, to resolve the foregoing problem.

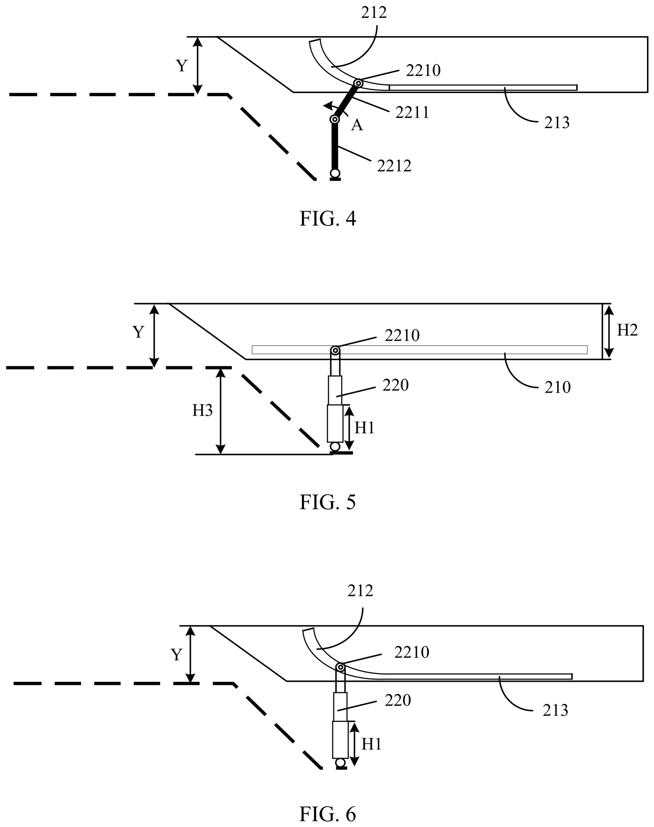

FIG. 4 is a diagram of another door apparatus 200 according to an embodiment of this application.

In some possible embodiments, the sliding rail mechanism 210 includes a curved sliding rail portion 212 and a straight sliding rail portion 213, and the curved sliding rail portion 212 is connected to the straight sliding rail portion 213.

Refer to the door apparatus 200 shown in FIG. 4. It can be learned that, the front arm 2211 of the transmission mechanism 220 may enter a deep part of a cavity of the door body 400 along the curved sliding rail portion 212, so that an arm span of the front arm 2211 is significantly reduced compared with the arm span of the front arm 2211 shown in FIG. 3, and occupies small internal space of the vehicle body. This can ensure that the second opening degree Y is small and can be controlled within 250 mm. In other words, when the door body 400 is in a fully-open state, small external space of the vehicle body is occupied; and when the door body 400 is in a fully-closed state, there is a small gap between the door body 400 and the side panel 600 of the vehicle body.

FIG. 5 is a diagram of another door apparatus 200 according to an embodiment of this application.

In some possible embodiments, the transmission mechanism 220 may alternatively be a hydraulic telescopic arm. When the hydraulic telescopic arm is compressed, the door body 400 can be driven to move toward an inner side of the vehicle body and an action of closing the vehicle door is completed. When the hydraulic telescopic arm is unfolded, the door body 400 can be driven to move toward an outer side of the vehicle body and an action of opening the vehicle door is completed, so that the door body 400 and the side panel 600 of the vehicle body are not in a same plane, and the door body 400 can further slide laterally.

In some possible embodiments, the transmission mechanism 220 in a form of the hydraulic telescopic arm may also cooperate with a drive mechanism 230, to form an electric sliding door with the door body 400, to meet a function requirement of the electric sliding door. The drive mechanism 230 may be driven based on a motor. Based on a movable connection relationship between the transmission mechanism 220 and the sliding rail mechanism 210, the transmission mechanism 220 drives, through the sliding rail mechanism 210, the entire door body 400 to slide along a sliding rail line shape of the sliding rail mechanism 210. A first opening degree X of lateral sliding of the door body 400 is equal to a straight line length of the sliding rail mechanism 210 mapped in a lateral direction L. This design provides a condition for maximizing the first opening degree X, so that the door body 400 can be greater than 700 mm in a fully-open state.

In some possible embodiments, similar to the door apparatus 200 shown in FIG. 3, when the sliding rail mechanism 210 is a straight guide rail, the door apparatus 200 shown in FIG. 5 also has a corresponding problem: The hydraulic telescopic arm needs a sufficient arm span length to push the door body 400 to a position that is not in a same plane as the side panel 600 of the vehicle body. In such a structure design, it is assumed that the hydraulic telescopic arm includes N stages, and a side fastened to the side panel 600 of the vehicle body is a first stage. In this case, a length of the first stage needs to be controlled, to ensure that the door body 400 and the side panel 600 of the vehicle body can be in a same plane when the door body 400 is in a fully-closed state. In addition, an arm span of the hydraulic telescopic arm needs to be long enough. Refer to FIG. 5. The following condition needs to be met: H1+H2≤H3. In this case, N needs to be large enough, which increases costs and difficulty of process manufacturing.

In view of this, an embodiment of this application provides another door apparatus 200, to resolve the foregoing problem.

FIG. 6 is a diagram of another door apparatus 200 according to an embodiment of this application.

In some possible embodiments, the sliding rail mechanism 210 includes a curved sliding rail portion 212 and a straight sliding rail portion 213, and the curved sliding rail portion 212 is connected to the straight sliding rail portion 213.

Refer to the door apparatus 200 shown in FIG. 6. It can be learned that, the hydraulic telescopic arm used as the transmission mechanism 220 may enter a deep part of a cavity of the door body 400 along the curved sliding rail portion 212, so that an arm span of the hydraulic telescopic arm is significantly reduced compared with the arm span of the hydraulic telescopic arm shown in FIG. 5, and occupies small internal space of the vehicle body. This can ensure that a second opening degree Y is small and can be controlled within 250 mm. In this way, the door body 400 in a fully-open state occupies small external space of the vehicle body, and after the door body 400 is fully closed, there is a small gap between the door body 400 and the side panel 600 of the vehicle body.

In some possible embodiments, the door apparatus 200 based on the foregoing design makes the sliding door no longer limited by a vehicle shape, and the sliding door may be used in a rear door of a vehicle, and may be used in a front door of the vehicle.

According to the foregoing technical solution, the sliding rail mechanism 210 is hidden in the door body 400, so that the sliding rail mechanism 210 is not likely to accumulate foreign matter. In addition, a structure in which the sliding rail mechanism 210 cooperates with the transmission mechanism 220 is used, so that the sliding door is no longer limited by a vehicle shape, and the sliding door can be used in both a front door and a rear door of a vehicle. On the contrary, a vehicle shape design of the vehicle is not limited by use of the sliding door. In addition, in a sliding door in which the door apparatus 200 is used, a second opening degree Y of outward opening is small, and a first opening degree X of lateral opening is large, so that practicability and comfort of a vehicle is improved.

The following describes in detail a structure in which the transmission mechanism 220 is the foregoing mechanical swing arm and the sliding rail mechanism 210 includes a curved sliding rail portion 212 and a straight sliding rail portion 213.

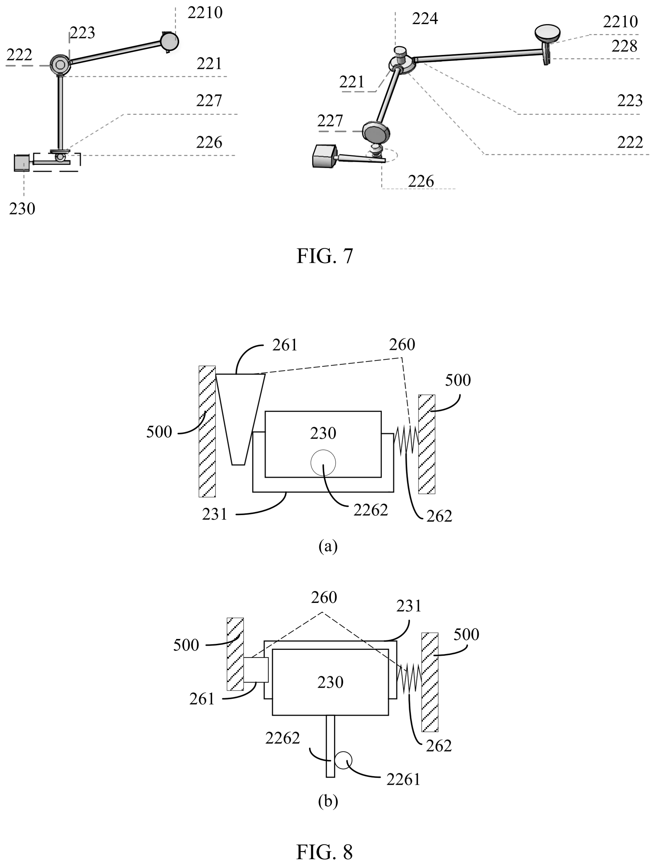

FIG. 7 is a diagram of a transmission mechanism 220 according to an embodiment of this application.

In some possible embodiments, when the door apparatus 200 is used in a scenario of an electric sliding door, the door apparatus further includes a drive mechanism 230, the transmission mechanism 220 further includes a sixth transmission portion 226 and a seventh transmission portion 227, the seventh transmission portion 227 is fastened to a second end of the rear arm 2212, the seventh transmission portion 227 is engaged with the sixth transmission portion 226, and the sixth transmission portion 226 is connected to the drive mechanism 230.

In some possible embodiments, the sixth transmission portion 226 is a worm gear, the seventh transmission portion 227 is a bevel gear, a worm wheel 2261 of the sixth transmission portion 226 is engaged with the seventh transmission portion 227, and a worm 2262 of the sixth transmission portion 226 is fastened to a drive shaft of the drive mechanism 230.

In some possible embodiments, when the drive mechanism 230 operates, the drive mechanism 230 drives the worm 2262 of the sixth transmission portion 226 to rotate around its own axis, the worm 2262 of the sixth transmission portion 226 drives the worm wheel 2261 of the sixth transmission portion 226 to rotate, the worm wheel 2261 of the sixth transmission portion 226 drives the seventh transmission portion 227 to rotate, and the seventh transmission portion 227 drives the rear arm 2212 to rotate around its own axis. This provides a prerequisite for transmitting a driving force to the sliding portion 2210.

The foregoing technical solution provides a prerequisite for implementing automatic opening and closing of the door body 400, to improve convenience of use of a vehicle.

In some possible embodiments, to enable the door apparatus 200 to be used in a scenario of a non-electric sliding door, for example, an unexpected scenario such as power-off of the drive mechanism 230, a clutch mechanism is further included between the worm wheel and the worm of the sixth transmission portion 226. The clutch mechanism includes a detached state and a connected state. When a drive motor cannot work, the clutch mechanism switches to the detached state to break a connection relationship between the worm wheel 2261 and the worm 2262 of the sixth transmission portion 226, so that the door body 400 can be manually pushed and slid easily. When the drive motor works, the clutch mechanism switches to the connected state to connect the worm wheel 2261 to the worm 2262 of the sixth transmission portion 226, so that the drive motor can transmit a driving force to the transmission mechanism 220, to implement automatic sliding of the door body 400.

FIG. 8 is a diagram of a clutch mechanism 260 according to an embodiment of this application. Herein, (a) in FIG. 8 is a front view of the clutch mechanism 260, and (b) in FIG. 8 is a top view of the clutch mechanism 260.

Refer to FIG. 8. It can be learned that, a front face of the drive mechanism 230 is fastened to a screw rod of the sixth transmission portion 226, and the clutch mechanism 260 includes a pin portion 261 and a moving portion 262. The pin portion 261 is wedge-shaped, a wedge face of the pin portion 261 is in contact with a first side face of the drive mechanism 230 (which may be a left side face of the drive mechanism 230 in the front view), a face that is of the pin portion 261 and that is opposite to the wedge face is in contact with a surrounding base portion 500, and the face opposite to the wedge face may be a wedge face or a plane. A first end of the moving portion 262 is connected to a second side face of the drive mechanism 230 (which may be a right side face of the drive mechanism 230 in the front view), and a second end of the moving portion 262 is connected to a surrounding base portion 500.

In some possible embodiments, to avoid great wear of the drive mechanism 230 in a process of inserting or removing the pin portion 261, the drive mechanism 230 may further include a mounting portion 231, and the wedge face of the pin portion 261 may be in contact with the mounting portion 231.

In some possible embodiments, the moving portion 262 may be a spring structure.

In some possible embodiments, with reference to (b) in FIG. 8, it can be learned that, because the drive mechanism 230 is connected to the worm 2262 of the sixth transmission portion, when the moving portion 262 is a spring structure, after the pin portion 261 is inserted between the base portion 500 and the drive mechanism 230, the drive mechanism 230 compresses the moving portion 262, so that the worm 2262 moves rightward with the drive mechanism 230 until the worm 2262 is connected to the worm wheel 2261. When the pin portion 261 is pulled out between the base portion 500 and the drive mechanism 230, the moving portion 262 pushes the drive mechanism 230 leftward, so that the worm 2262 moves leftward with the drive mechanism 230 until the worm 2262 is separated from the worm wheel 2261.

The foregoing technical solution implements a function of clutch state switching of the sixth transmission portion 226. In an unexpected scenario such as power-off of the drive mechanism 230, the clutch mechanism 260 is used to break a connection relationship between the worm wheel 2261 and the worm 2262 of the sixth transmission portion 226, so that the door body 400 can be manually pushed and slid easily.

In some possible embodiments, the transmission mechanism 220 further includes an eighth transmission portion 228, the eighth transmission portion 228 is fastened to a second end of the front arm 2211, and the eighth transmission portion 228 is engaged with the sliding portion 2210.

In some possible embodiments, the eighth transmission portion 228 includes a first bevel gear 2281 and a second bevel gear 2282, the sliding portion 2210 includes a spur gear, the first bevel gear 2281 is coaxially fastened to the second end of the front arm 2211, and the second bevel gear 2282 is engaged with both the first bevel gear 2281 and the sliding portion 2210.

According to the foregoing technical solution, the eighth transmission portion 228 is used, so that a transmission force can be finally applied to the sliding portion 2210. Further, based on rotation of the sliding portion 2210 and the engagement relationship between the sliding portion 2210 and the sliding rail mechanism 210, the door body 400 is pulled to slide along a sliding rail line shape of the sliding rail mechanism 210.

In some possible embodiments, the transmission mechanism 220 further includes a first transmission portion 221, a second transmission portion 222, and a third transmission portion 223. The first transmission portion 221 is coaxially fastened to the rear arm 2212, the third transmission portion 223 is coaxially fastened to the first end of the front arm 2211, and the second transmission portion 222 is engaged with both the first transmission portion 221 and the third transmission portion 223.

In some possible embodiments, the second transmission portion 222 may be engaged with both the first transmission portion 221 and the third transmission portion 223 through gears. Specifically, the first transmission portion 221 and the second transmission portion 222 may be bevel gears, the third transmission portion may be a bevel gear with a variable transmission ratio, and a variable transmission ratio coefficient of the third transmission portion is greater than 1.

The apparatus structure provided in the foregoing embodiment is used, so that the front arm 2211 of the transmission mechanism 220 can be rotatably connected to the rear arm 2212. In this way, the front arm 2211 rotates around a first axis relative to the rear arm 2212, to push the door body 400 toward a first direction A. The first axis is an axis of a rotation mechanism. For example, the door body 400 is a vehicle door, and the first direction A is a direction in which the vehicle door is pushed outward.

In some possible embodiments, when the rear arm 2212 rotates around its own axis, the rear arm 2212 drives the first transmission portion 221 to rotate, the first transmission portion 221 drives the second transmission portion 222 to rotate, the second transmission portion 222 drives the third transmission portion 223 to rotate, and the third transmission portion 223 drives the front arm 2211 to rotate around its own axis. This provides a prerequisite for finally transmitting a transmission force to the sliding portion 2210.

In some possible embodiments, it is assumed that the variable transmission ratio coefficient of the third transmission portion 223 is M. When the second transmission portion 222 rotates one revolution, based on a feature of the variable transmission ratio of the third transmission portion 223, a transmission ratio from the second transmission portion 222 to the third transmission portion 223 may be increased by a factor of M. In other words, the third transmission portion 223 may rotate M revolutions, and based on the M revolutions of the third transmission portion 223, the front arm 2211 is driven to rotate M revolutions around its own axis. When there is no gear with a variable transmission ratio between the sliding portion 2210 and the front arm 2211, the sliding portion 2210 may also rotate M revolutions. Through proper calculation, after the sliding portion 2210 rotates M revolutions, the sliding portion 2210 may cover a sliding rail trajectory of the entire sliding rail mechanism 210.

According to the foregoing technical solution, the transmission mechanism 220 can implement bending and extension motion, so that the door body 400 can implement actions of opening and closing. In addition, a prerequisite is provided for finally transmitting a transmission force to the sliding portion 2210, so that the door body 400 can slide laterally.

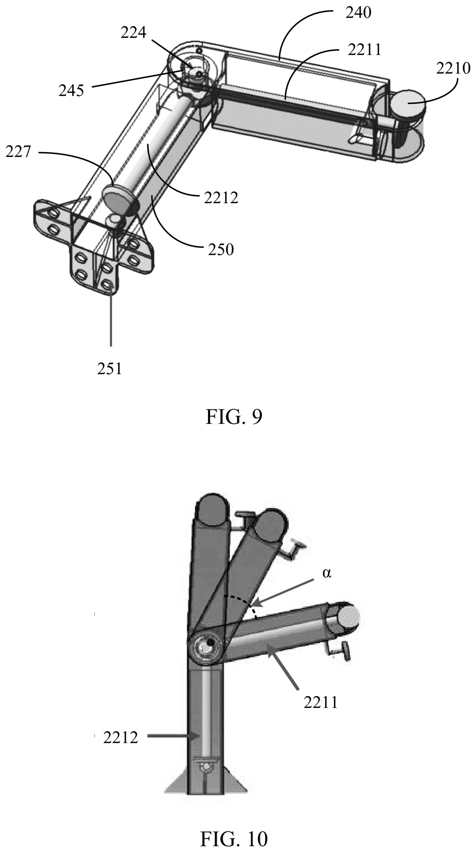

FIG. 9 is a diagram of another door apparatus 200 according to an embodiment of this application.

In some possible embodiments, the door apparatus further includes a first sleeve 240, the first sleeve 240 is sleeved on the front arm 2211 and is fastened to the front arm 2211, the first sleeve 240 includes a fifth transmission portion 245, the transmission mechanism 220 further includes a fourth transmission portion 224, the fourth transmission portion 224 is an intermittent transmission portion and is coaxially fastened to the second transmission portion 222, and the fourth transmission portion 224 is engaged with the fifth transmission portion 245.

In some possible embodiments, the fourth transmission portion 224 may be any one of the following components: an incomplete gear, a groove wheel, a ratchet, a cam, or the like.

In some possible embodiments, to implement the engagement relationship between the fourth transmission portion 224 and the fifth transmission portion 245, specific composition of the fifth transmission portion 245 needs to match specific composition of the fourth transmission portion 224. For example, when the fourth transmission portion 224 is an incomplete gear, the fifth transmission portion 245 is a rack.

According to the foregoing technical solution, the front arm 2211 can intermittently swing, and it is ensured that after the front arm 2211 extends to a specified position, based on the drive mechanism 230, the door body 400 is only driven to continue to slide laterally and is not further pushed outward. In addition, the first sleeve 240 is used to wrap the front arm 2211, so that the front arm 2211 is protected and can be prevented from being entangled with another component in a process in which the front arm 2211 rotates around its own axis.

FIG. 10 is a side view of a transmission mechanism 220 according to an embodiment of this application.

In some possible embodiments, because the fourth transmission portion 224 is an intermittent transmission portion and the fourth transmission portion 224 is coaxial with the second transmission portion 222, after the fourth transmission portion 224 is engaged with the fifth transmission portion 245 of the first sleeve 240, when a driving force of the drive mechanism 230 is transmitted to the second transmission portion 222 through components of the transmission mechanism 220 and drives the second transmission portion 222 to rotate, the fourth transmission portion 224 rotates with the second transmission portion 222, and drives the fifth transmission portion 245 to intermittently rotate, so that the first sleeve 240 drives the front arm 2211 to swing within a first range. The first range is an interval range of a first angle α, and the first angle α is an included angle between the front arm 2211 and the rear arm 2212. A size of the first range is related to a structure of the fourth transmission portion 224. For example, for an incomplete gear, more sawtooth parts indicate a larger first range. For example, if the sawtooth parts occupy 1/4 of the entire gear, the first range is an interval [90°, 180°], so that the vehicle door can be normally opened without scratching the side panel. For example, when the fourth transmission portion 224 is an incomplete gear, after the fourth transmission portion 224 rotates the first angle α, although the fourth transmission portion 224 continues to rotate based on rotation of the second transmission portion 222, a part that is of the fourth transmission portion 224 and that has no sawtooth cannot have an engagement relationship with the fifth transmission portion 245. Therefore, even if the fourth transmission portion 224 continuously rotates, the swing arm based on the fourth transmission portion 224 does not continuously swing. In addition, the sliding portion 2210 that rotates based on a transmission force also continuously rotates, to realize a motion relationship in which the transmission mechanism 220 intermittently swings and the sliding portion 2210 can continuously rotate.

In some possible embodiments, with reference to FIG. 9 or FIG. 10, the door apparatus 200 further includes a second sleeve 250, the second sleeve 250 is sleeved on the rear arm 2212 and is fastened to the rear arm 2212, and the second sleeve 250 is fastened relative to the front arm 2211.

In some possible embodiments, the door apparatus 200 further includes a fastening portion 251, the fastening portion 251 is configured to fasten the second sleeve 250 to the base portion 500, to fasten the transmission mechanism 220 to the base portion 500.

According to the foregoing technical solution, the front arm 2211 of the transmission mechanism 220 can intermittently swing, so that the door body 400 is pushed outward. This provides a prerequisite for the door body 400 to slide laterally, and can ensure that the second opening degree Y is maintained within a small range. In addition, the sleeve is used to wrap the outside of the transmission mechanism 220, so that the transmission mechanism 220 is protected and the transmission mechanism 220 can be prevented from being entangled with or colliding with another component or the like, to improve safety of the door apparatus 200.

An embodiment of this application further provides a connection apparatus. The connection apparatus includes any sliding rail mechanism 210 and any transmission mechanism 220 provided in the foregoing embodiments. Because connection relationships and operating principles of components of the sliding rail mechanism 210 and the transmission mechanism 220 of the connection apparatus are the same as connection relationships and operating principles of components of the sliding rail mechanism 210 and the transmission mechanism 220 of the door apparatus 200, for related extension of the connection apparatus, reference may be made to the embodiment corresponding to the door apparatus 200, and details are not described herein again.

In some possible embodiments, the connection apparatus may be used in a scenario other than a door body 400. In other words, a mounting object is not limited to the door body 400. The connection apparatus allows the mounting object to slide along a sliding rail line shape of the sliding rail mechanism 210.

An embodiment of this application further provides a vehicle door, used in a vehicle. The vehicle door includes at least two connection apparatuses provided in the foregoing embodiments.

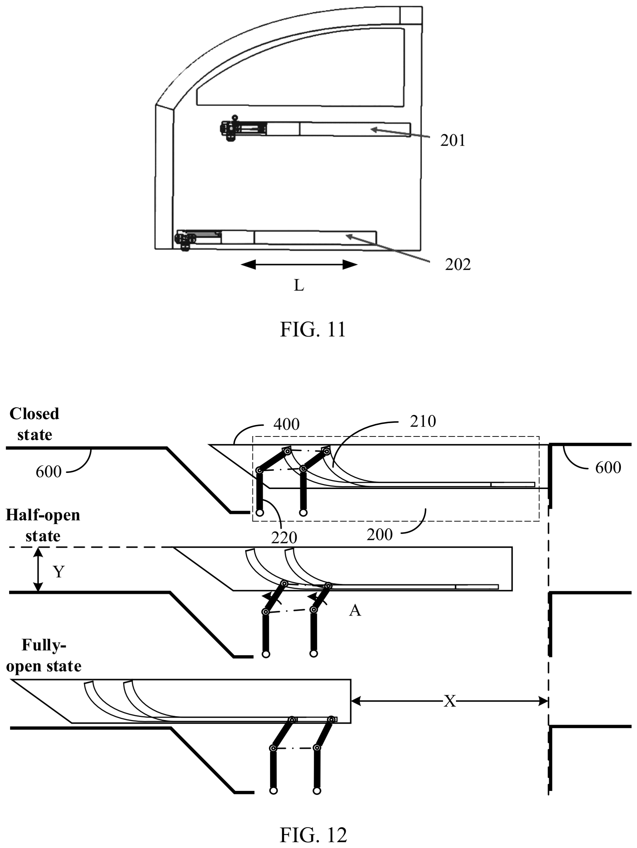

FIG. 11 is a diagram of deployment of a door apparatus 200 according to an embodiment of this application.

Refer to FIG. 11. When two connection apparatuses, for example, a first connection apparatus 201 and a second connection apparatus 202, are deployed on the foregoing door body, which may be specifically a vehicle door, fastening positions of the first connection apparatus 201 and the second connection apparatus 202 are staggered with each other. Further, the first connection apparatus 201 is disposed at a first position of the vehicle door, and the second connection apparatus 202 is disposed at a second position of the vehicle door. The first position and the second position are as far apart as possible in a longitudinal direction of the vehicle door, and are staggered with each other in a lateral direction L of the vehicle door.

In some possible embodiments, each of planes in which sliding rail mechanisms 210 of the at least two connection apparatuses are located is parallel to a plane in the lateral direction L of the vehicle door, namely, a plane in a length direction of the vehicle door.

According to the foregoing technical solution, it can be ensured that in a lateral sliding process of the door body 400, the door body 400 is parallel as much as possible to a plane in which a side panel 600 of a vehicle body is located, and does not scratch the side panel 600 of the vehicle body, and support stability of the door body 400 is improved.

FIG. 12 is a diagram of an operating principle of a door apparatus 200 according to an embodiment of this application.

For ease of description, the following describes only an operating process of one door apparatus 200.

When a door body 400 is in a closed state, a transmission mechanism 220 is in a bent state, and a sliding portion 2210 of the transmission mechanism 220 is located at the top of a curved sliding rail portion 212 of a sliding rail mechanism 210. In this case, the door body 400 is embedded in a structure of a side panel 600 of a vehicle body.

In a process of opening the door body 400, a drive portion starts to operate, and drives a rotation mechanism of the transmission mechanism 220 to operate, so that the transmission mechanism 220 extends gradually. To be specific, a front arm 2211 of the transmission mechanism 220 starts to intermittently swing. In addition, the sliding portion 2210 operates synchronously based on a transmitted driving force, and finally applies a force to the curved sliding rail portion 212 of the sliding rail mechanism 210, so that the door body 400 slides laterally and is pushed outward until the door body is not in a same plane as the side panel 600 of the vehicle body. In this case, the sliding portion 2210 moves to a part of a straight sliding rail portion 213 of the sliding rail mechanism 210, and the transmission mechanism 220 has completed intermittent swing motion under an action of a fourth transmission portion 224 and does not further extend. Then, the sliding portion 2210 continues to operate, and continues to apply a force to the sliding rail mechanism 210, to pull the entire door body 400 to slide laterally, until the sliding portion 2210 moves to a bottom position of the straight sliding rail portion 213 of the sliding rail mechanism 210. In other words, a displacement trajectory of the sliding portion 2210 covers a rail line shape of the entire sliding rail mechanism 210. In this case, the door body 400 is fully opened.

A car is used as an example. When the door body 400 is in a fully-open state, a first opening degree X of the door body 400 can be greater than 700 mm, and a second opening degree Y of the door body 400 can be limited within 250 mm. For different vehicle shapes and vehicle doors of different shapes, an expected first opening degree X and an expected second opening degree Y are correspondingly adjusted. However, a basis can be provided for maximizing the first opening degree X and minimizing the second opening degree Y while vehicle shapes are consistent.

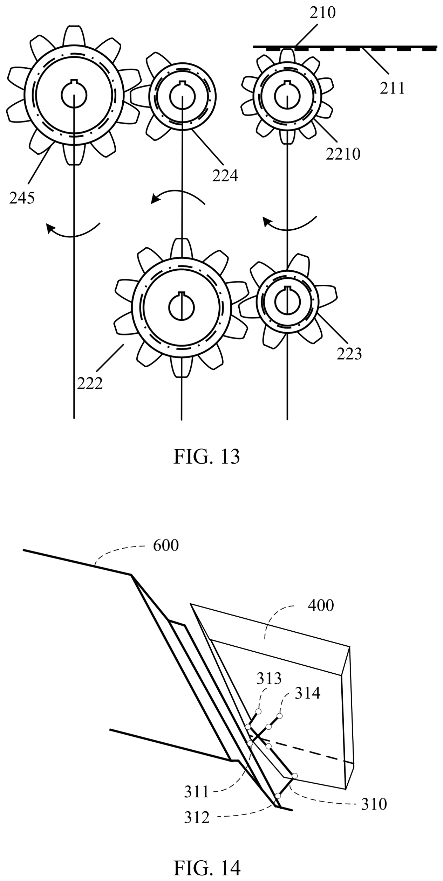

FIG. 13 is a diagram of transmission between components of a door apparatus 200 according to an embodiment of this application.

Based on specific composition of the foregoing components, an operating principle of the door apparatus 200 may be described as follows: The motor drives the worm 2262 of the sixth transmission portion 226 to rotate around its own axis, the worm 2262 of the sixth transmission portion 226 drives the worm wheel 2261 of the sixth transmission portion 226 to rotate, the worm wheel 2261 of the sixth transmission portion 226 drives the seventh transmission portion 227 to rotate, the seventh transmission portion 227 drives the rear arm 2212 to rotate around its own axis, the rear arm 2212 drives the first transmission portion 221 to rotate, the first transmission portion 221 drives the second transmission portion 222 to rotate, the second transmission portion 222 drives the third transmission portion 223 to rotate, the third transmission portion 223 drives the front arm 2211 to rotate around its own axis, the front arm 2211 drives the eighth transmission portion 228 to rotate, and the eighth transmission portion 228 drives the sliding portion 2210 to slide on the sliding rail mechanism 210.

In a process in which the sliding portion 2210 slides on the sliding rail mechanism 210, the fourth transmission portion 224 rotates with the second transmission portion 222, and drives the fifth transmission portion 245 to intermittently rotate, so that the first sleeve 240 drives the front arm 2211 to intermittently swing, and the door body 400 moves along a first trajectory under constraint of the sliding portion 2210 and the sliding rail mechanism 210. The first trajectory conforms to the curved sliding rail portion 212.

In some possible embodiments, for a manner of transmission between the foregoing transmission portions, in addition to a bevel gear group or a worm gear, other gear combination transmission is also applicable to the door apparatus 200, to implement sliding of the door body 400. A combination form of a gear group may alternatively be a form of multi-gear engagement, belt pulley cooperation, or the like, and is applicable to implementation of the foregoing technical solution, provided that a motor driving force can be transmitted to the sliding portion 2210.

An embodiment of this application further provides a vehicle, including any door apparatus 200 provided in the foregoing embodiments.

In some possible embodiments, embodiments of this application provide another door apparatus 300. The door apparatus 300 may replace the foregoing door apparatus 200, and is used in various scenarios.

FIG. 14 is a diagram of a door apparatus 300 according to an embodiment of this application. Refer to FIG. 14. It can be learned that the door apparatus 300 may be used in a vehicle.

The door apparatus 300 includes a door body 400 and a double four-link 310. The double four-link 310 includes a first fastening portion 311, a second fastening portion 312, a third fastening portion 313, and a fourth fastening portion 314. The first fastening portion 311 and the second fastening portion 312 are fastened to an edge of a side panel 600 of a vehicle body, and the third fastening portion 313 and the fourth fastening portion 314 are fastened to the door body 400.

According to the foregoing technical solution, the double four-link 310 is used to push and retract the door body 400, and there is no problem that foreign matter is likely to be accumulated in a sliding rail. In addition, the door body 400 using the door apparatus is no longer limited by a vehicle shape, and can be used in both a front door and a rear door of a vehicle. On the contrary, a vehicle shape design of the vehicle is not limited by use of the door apparatus.

In some possible embodiments, the door apparatus 300 further includes a drive mechanism 230, and the double four-link 310 further includes a transmission mechanism 220. The transmission mechanism 220 is connected to the drive mechanism 230. The drive mechanism 230 applies a driving force to the transmission mechanism 220, and the transmission mechanism 220 unfolds or compresses the double four-link 310 based on the driving force, to automatically open or close a vehicle door.

The foregoing technical solution can implement automatic opening and closing of the door body 400, to improve use experience and comfort of a vehicle.

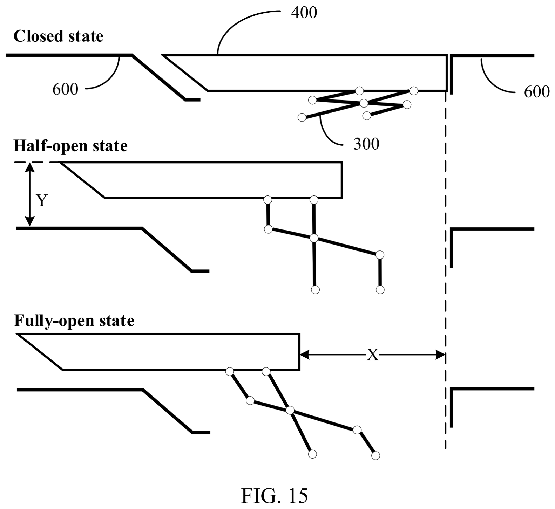

FIG. 15 is a diagram of an operating principle of a door apparatus 300 according to an embodiment of this application.

When the door body 400 is in a closed state, the double four-link 310 is in a bent state.

In a process of opening the door body 400, the drive mechanism 230 starts to operate, and applies a driving force to the transmission mechanism 220, and the transmission mechanism 220 unfolds the double four-link based on the driving force, to push the door body 400 outward diagonally until the door body 400 is fully opened.

A car is used as an example. When the door body 400 is in a fully-open state, a first opening degree X of the door body 400 can be greater than 600 mm, and a second opening degree Y of the door body 400 can be limited within 350 mm. For different vehicle shapes and vehicle doors of different shapes, an expected first opening degree X and an expected second opening degree Y are correspondingly adjusted. However, a basis can be provided for maximizing the first opening degree X and minimizing the second opening degree Y while vehicle shapes are consistent. In addition, automatic opening and closing of a front door of a vehicle can also be implemented based on the door apparatus 300.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A connection apparatus, comprising:
a sliding rail mechanism (210), comprising an internal rack (211); and
a transmission mechanism (220), comprising a sliding portion (2210), wherein the sliding portion (2210) is engaged with the internal rack (211); and
the sliding rail mechanism (210) is configured to move relative to the sliding portion (2210) under driving of the sliding portion (2210).

2. The connection apparatus according to claim 1, wherein the sliding rail mechanism (210) further comprises:
a curved sliding rail portion (212) and a straight sliding rail portion (213), wherein the curved sliding rail portion (212) is connected to the straight sliding rail portion (213).

3. The connection apparatus according to claim 1 or 2, wherein the transmission mechanism (220) further comprises:
a front arm (2211) and a rear arm (2212), wherein
the front arm (2211) and the rear arm (2212) are located in a same plane, and a first end of the front arm (2211) is rotatably connected to a first end of the rear arm (2212).

4. The connection apparatus according to claim 3, wherein the connection apparatus further comprises a drive mechanism (230), the transmission mechanism (220) further comprises a sixth transmission portion (226) and a seventh transmission portion (227), the seventh transmission portion (227) is fastened to a second end of the rear arm (2212), the seventh transmission portion (227) is engaged with the sixth transmission portion (226), and the sixth transmission portion (226) is connected to the drive mechanism (230).

5. The connection apparatus according to claim 3 or 4, wherein the transmission mechanism (220) further comprises an eighth transmission portion (228), the eighth transmission portion (228) is fastened to a second end of the front arm (2211), and the eighth transmission portion (228) is engaged with the sliding portion (2210).

6. The connection apparatus according to claim 5, wherein the eighth transmission portion (228) comprises a first bevel gear (2281) and a second bevel gear (2282), the sliding portion (2210) comprises a spur gear, the first bevel gear (2281) is coaxially fastened to the second end of the front arm (2211), and the second bevel gear (2282) is engaged with both the first bevel gear (2281) and the sliding portion (2210).

7. The connection apparatus according to any one of claims 3 to 6, wherein the transmission mechanism (220) further comprises:
a first transmission portion (221), wherein the first transmission portion (221) is coaxially fastened to the first end of the rear arm (2212);
a third transmission portion (223), wherein the third transmission portion (223) is coaxially fastened to the first end of the front arm (2211); and
a second transmission portion (222), wherein the second transmission portion (222) is engaged with both the first transmission portion (221) and the third transmission portion (223).

8. The connection apparatus according to claim 7, wherein the first transmission portion (221) and the second transmission portion (222) are bevel gears, the third transmission portion (223) is a bevel gear with a variable transmission ratio, and a variable transmission ratio coefficient of the third transmission portion (223) is greater than 1.

9. The connection apparatus according to claim 7 or 8, wherein the connection apparatus further comprises a first sleeve (240), the first sleeve (240) is sleeved on the front arm (2211) and is fastened to the front arm (2211), the first sleeve (240) comprises a fifth transmission portion (245), the transmission mechanism (220) further comprises a fourth transmission portion (224), and the fourth transmission portion (224) is an intermittent transmission portion and is coaxially fastened to the second transmission portion (222); and
the fourth transmission portion (224) is engaged with the fifth transmission portion (245).

10. The connection apparatus according to claim 9, wherein the fourth transmission portion (224) is any one of the following components: an incomplete gear, a groove wheel, a ratchet, or a cam.

11. The connection apparatus according to any one of claims 3 to 10, wherein the connection apparatus further comprises:
a second sleeve (250), wherein the second sleeve (250) is sleeved on the rear arm (2212) and is fastened to the rear arm (2212), and the second sleeve (250) is fastened relative to the front arm (2211).

12. A door apparatus (200), comprising a door body (400) and the connection apparatus according to any one of claims 1 to 11, wherein the sliding rail mechanism (210) is fastened in the door body (400), and the transmission mechanism (220) is configured to drive the sliding portion (2210) and drive the door body (400) to move along the sliding rail mechanism (210).

13. A vehicle, comprising the door apparatus (200) according to claim 12.

14. The vehicle according to claim 13, wherein the door apparatus (200) comprises at least two connection apparatuses.

15. The vehicle according to claim 14, wherein fastening positions of a first connection apparatus and a second connection apparatus in the at least two connection apparatuses are staggered with each other.

16. The vehicle according to claim 15, wherein each of planes in which the sliding rail mechanisms (210) of the at least two connection apparatuses are located is parallel to a plane in a length direction of the door body (400).
